# EUROPEAN PATENT APPLICATION

(11) **EP 1 462 671 A1**
(43) Date of publication of application: **29.09.2004**
(21) Application number: 04006784.5
(22) Date of filing: 22.03.2004
(51) Int. Cl.: F16D 55/2265, F16D 65/097, F16D 65/20, F16D 65/14

(54) **One piece sliding brake caliper**

(30) Priority: 24.03.2003 US 395925
(71) Applicant: Akebono Corporation, Farmington Hills, Michigan 48331 (US)
(72) Inventor: Barbosa, Manuel, Novi, Michigan 48375 (US); Barrett, Sean C., Farmington Hills Michigan 48331 (US); Jedele, Philip N., Plymouth, Michigan 48170 (US)
(74) Representative: Neumann, Ernst Dieter, Dipl.-Ing.

(57) **Abstract**

A caliper assembly (20) has a one-piece housing (30) with a first (38) and second (40) wall opposing one another. A pair of bridge sides (44,46) connect the first and second walls (38,40). A bore (56) is formed in the first wall (38) to receive a piston assembly (36). An opening (50) is formed between the first wall (38), second wall (40) and pair of bridge sides (44,46). The opening (50) enables access into the caliper body. At least one aperture (55) is formed in the second wall (40). The aperture (55) is continuous with the opening (50) to enable access into the body.

## Description

### BACKGROUND OF THE INVENTION

The present invention relates to braking systems and, more particularly, to brake calipers.

Typical sliding brake calipers, known as "fist" brake calipers utilize two castings that serve two separate functions in a brake caliper. The first casting, the caliper body, provides a housing for the hydraulic piston that squeezes the friction pads together. The second casting, the support bracket, provides pad anchorage and support for slide pins that hold the caliper body in position. These two parts are made from relatively expensive castings and require extensive machining to mate the components and assembly together.

Another type of caliper, known as a "FIS" caliper does not include a support bracket. The caliper body provides a port for the caliper slide pins and anchorage of the outboard friction pad. The inboard friction pad is anchored to the knuckle thus taking the inboard friction brake torque reaction directly to the knuckle arms. The caliper body is made in two halves and is bolted together. The caliper body bridge is substantially thick to provide anchorage for the caliper body bolts. The assembly of the caliper to the knuckle must be done in several steps such that the inboard pads must be installed to the knuckle before installing the caliper body. In this design, since the knuckle includes the brake pad and abutment, the caliper cost is reduced, however, this cost is transferred to the knuckle.

U.S. Patent No. 5,249,649 illustrates a caliper design which utilizes arms built directly into the knuckle to react to both the inboard and outboard pad brake torque. The caliper body contains a slide pin mechanism that is bolted to the knuckle to hold the caliper body in position. This design reduces caliper costs since the cost is transferred, by addition of the friction pad anchorage, to the knuckle.

### SUMMARY OF THE INVENTION

The present invention provides the arts with a simple one-piece caliper housing design. The present invention provides a caliper housing which acts both as a support bracket as well as a caliper body. The present invention provides a one-piece body casting as well as a one-piece sliding caliper. The present invention provides simplified machining of the caliper body. The present invention enables both brake pads to be contained within the caliper. The present invention provides a relatively thin caliper bridge which acts in tension. Also, the present invention provides pad abutment such that the abutment is above the pad friction center when resting against the caliper bridge.

From the following detailed description, accompanying drawings and appended claims, other objects and advantages of the present invention will become apparent to those skilled in the art.

### BRIEF DESCRIPTION OF THE DRAWINGS

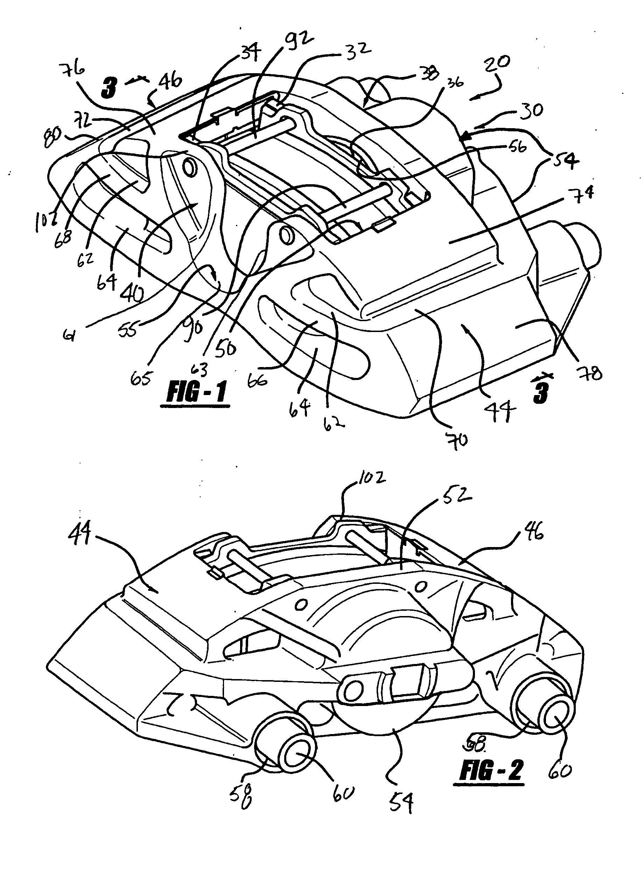

Figure 1 is a perspective view of a first caliper design in accordance with the present invention.

Figure 2 is a rear perspective view of a caliper of Figure 1.

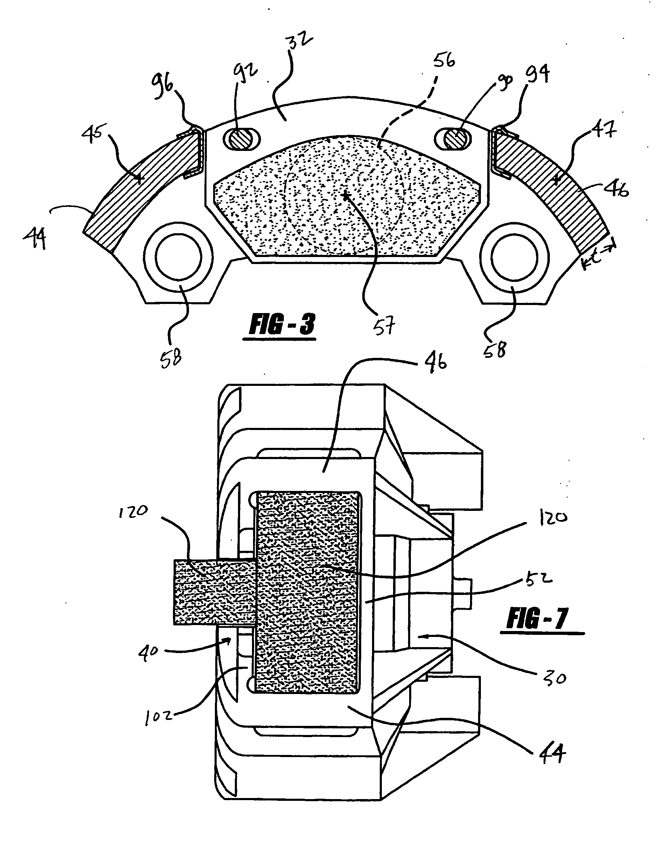

Figure 3 is a cross-section view through line 3-3 of Figure 1.

Figure 4 is a perspective view of a second embodiment of the present invention.

Figures 5, 6 and 7 are diagrammatic views of a method of manufacturing the caliper body.

### DETAILED DESCRIPTION OF THE PREFERRED EMBODIMENT

Turning to the Figures, a caliper assembly is shown and designated with the reference numeral 20. The caliper assembly 20 includes a one-piece caliper housing 30, a pair of brake pads 32 and 34 as well as a piston assembly 36.

The caliper housing 30 includes a first wall 38, a second wall 40 and a caliper bridge having two sides 44 and 46. The first wall 38 and second wall 40 oppose one another. The caliper bridge sides 44 and 46 connect with the first and second walls 38 and 40 and also oppose one another. The first wall 38, second wall 40 and caliper bridge sides 44 and 46 define an opening 50. The opening 50 is formed on the outer radius of the caliper bridge and enables brake pads 32 and 34 to be inserted through the opening 50.

Turning to the first wall portion 38, the first wall portion 38 includes an inner beam portion 52 and a cylinder portion 54. The cylinder portion 54 includes a bore 56 to receive the piston assembly 36. The wall portion 38 also includes a pair of apertures 58 which receive slide sleeve 60 which receive bolts to secure the housing to a knuckle. The slide sleeves 60 are tubular to enable passage of bolts through the slide sleeves to secure the caliper to a knuckle. The aperture centers are located radially near the piston bore center in order to reduce the bending offset distance.

The inner beam 52 spans between the bridge sides 44 and 46. The inner beam portion 52 has approximately equal distance on each side of the piston bore 56. This enables the centroid 45, 47 of the bridge sides 44, 46 to be approximately inline with the piston bore center 57. Accordingly, this enables the bridge sides 44, 46 counteract the hydraulic piston forces by being more in tension than in bending. Accordingly, this provides a stiffer caliper which utilizes less fluid displacement and improves, by reducing, the vehicle driver's pedal travel.

Since the bridge sides act in tension, the bridge sides are thin and have a desired thickness (t) less than conventional caliper designs. The thickness (t) of the bridge is between eight to fourteen millimeters and preferably between ten to twelve millimeters. Also, the thinner bridge sides provides a smaller wheel radial package space which enables a larger rotor diameter and a larger caliper effective radius. Thus, the caliper produces greater braking torque for a given piston pressure and lining coefficient. In many cases, the larger effective radius enables the caliper piston size to be decreased. This yields an even greater reduction of fluid displacement and reduces vehicle brake pedal travel. The larger rotor enables greater rotor mass to be used for braking thermal energy absorption. This, in turn, provides lower brake lining temperatures which, in turn, provides greater lining life.

The second wall 40 includes a U-shaped aperture 55, in the outer beam 102, which is continuous with the opening 50. Thus, the U-shaped aperture opening originates from the caliper bridge and extends away from the caliper bridge which is opposite to conventional calipers. The U-shaped aperture may be V-shaped or the like. The aperture is defined by a pair of legs 61 and 63 and a web 65. The legs 61, 63 are parallel with each other or project away from one another creating a larger gap at the opening 50. The U-shaped aperture 55 receives a tool to machine the caliper which will be explained herein. The second wall 40 includes indentions 62 and 64 which define ribs 66 and 68.

The bridge sides 44 and 46 include indentations 70 and 72. The indentations 70 and 72 are continuous with the indentation 62, 64 on the second wall 40. The indentation defines ribs 74 and 76, 78 and 80 on the bridge sides 44 and 46. The ribs provide an overall hoop appearance extending around the caliper housing. Also, the indentations 70, 72 and 62 and 64 may include an aperture.

Pins 90 and 92 span the opening 50 and support the brake pads 32 and 34. The pins 90 and 92 are received in apertures in the first and second walls. The pads 32 and 34 may include stainless steel clips 94, 96. The clips enhance the corrosion resistance of the caliper. Both brake pads 32 and 34 abut against bridge portions on the respective bridge sides 44, 46. Thus, the pads 32 and 34 are contained within the caliper.

Brake pad 32 may have a surface area smaller than brake pad 34. Brake pad 32 is positioned against the piston assembly 36 so that the pad abutment is above the pad friction center against the bridge sides 44, 46. The outer pad 34 may have an increased area to improve lining life. Also, by having a larger pad area, the brake pad 34 can have a decreased pad thickness in order to provide greater vehicle axial wheel packaging space for the caliper. The pad 34 abuts the bridge sides 44, 46 and contacts the outer beam 102 of the second wall. The outer beam 102 provides necessary stiffness to support the brake pad 34 and resist the piston hydraulic force. Also, material can be removed to form the indentations in non key areas so that the caliper stiffness is maintained while reducing the overall weight.

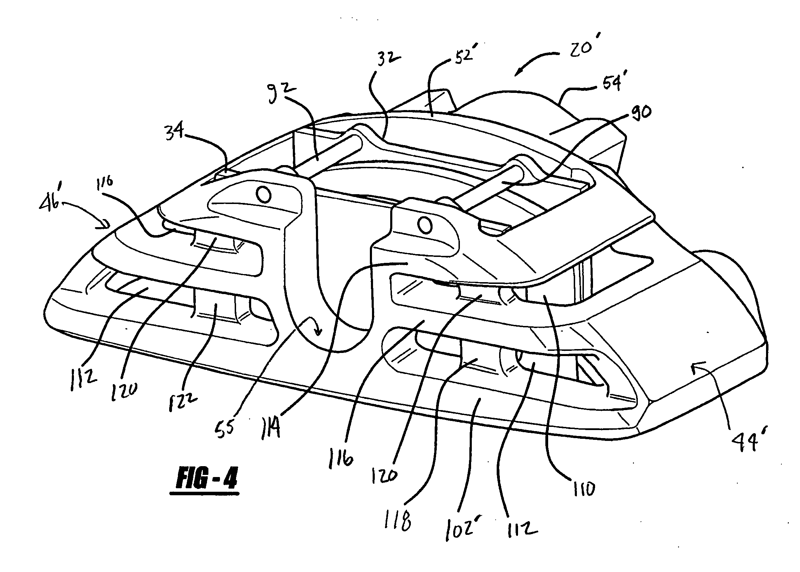

Turning to Figure 4, the second embodiment of the present invention is shown. Here, the caliper assembly 20' is substantially similar to the one previously described, however, the second wall 40' and bridge sides 44', 46' include cutouts 110, 112. The cutouts 110, 112 define three ribs 114, 116, 118 which are continuous about the bridge sides 44', 46' and second wall 40'. Thus, a circumferential rib and opening are created around the second wall 40' and bridge sides 44', 46'. Also, stanchions 120, 122 are formed on the second wall 40' to provide strength to the second wall 40'.

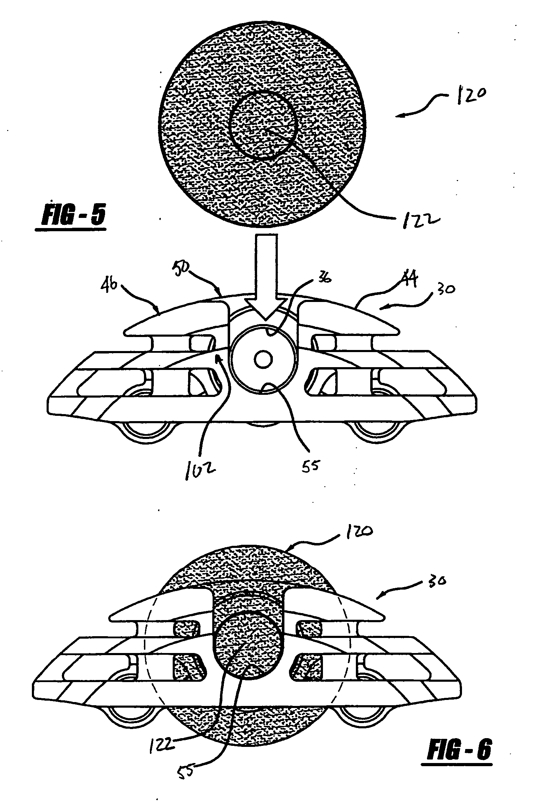

Turning to Figures 5, 6 and 7, a method for forming the caliper housing and assembly will be discussed.

The caliper housing 30 is manufactured by casting or the like. After casting, the piston bore 56 is machined to finish the inside surface of the bore 56. The finishing tool is dropped into the U-shaped aperture 55 and opening 50 and passed axially into the bore 56. Thus, the U-shaped opening 55 can be minimized since it only need be large enough to receive the tool shaft, instead of the entire tool diameter. Next, a milling cutter 120 is dropped into the opening 50 of the caliper housing 30. The milling tool finishes the inner surface of the bridge sides 44, 46, as well as the inner surface of the and second wall 40 and, if need, the first wall 38. As can be seen, the shaft 122 of the milling cutter 120 enters into the U-shaped aperture 55. After the milling cutter has been turned and finishes the inner surfaces, the milling cutter is removed. Thus, the interior surfaces of the caliper housing 30 can be finished in a simplified process.

After the inner surfaces of the caliper 30 is finished, the piston assemblies 36 is positioned within the bore 56. The stainless steel clips are installed on the side bridges. The brake pads 32 and 34 are inserted into the caliper housing 30. The pins, are positioned with the brake pads to hold the brake pads in position. Next, the slide sleeves are positioned into the apertures for assembly to the knuckle.

The description of the invention is merely exemplary in nature and, thus, variations that do not depart from the gist of the invention are intended to be within the scope of the invention. Such variations are not to be regarded as a departure from the spirit and scope of the invention.

## Claims

1. A brake caliper comprising:
a one piece body, said body having a first wall and an opposing second wall, a pair of bridge sides connect said first and second walls;
said first wall including at least one bore for receiving a piston assembly;
an opening is formed between said first wall, second wall and pair of bridge sides, said opening enabling access into said body, at least one aperture is formed in said second wall, said aperture is continuous with said opening for enabling tools access into said body through said aperture and said opening for machining an inner surface of said body.

2. The caliper according to Claim 1 wherein said bridge sides define a centroid which are substantially aligned with a center of said at least one bore enabling tension deflection of said bridge sides.

3. The caliper according to Claim 3 wherein said bridge sides have a desired thickness between 8 mm to 14 mm.

4. The caliper according to Claim 1 wherein an indentation is formed along said side beams and is continuous onto said second wall defining at least one rib.

5. The caliper according to Claim 4 wherein an aperture is present in said indentation.

6. The caliper according to Claim 1 wherein said aperture is U or V-shaped.

7. A caliper assembly comprising:
a one piece body, said body having a first wall and an opposing second wall, a pair of bridge sides connect said first and second walls;
said first wall including at least one bore for receiving a piston assembly;
an opening formed between said first wall, second wall and pair of bridge sides, said opening enabling access into said body, at least one aperture in said second wall, said aperture continuous with said opening for enabling access into said body;
a first and second brake pad, said first brake pad abutting said first wall and the second brake pad abutting said second wall;
at least one piston assembly positioned in said at least one bore; and
a pair of apertures on said first wall enabling coupling with a knuckle.

8. The caliper assembly according to Claim 7 wherein said bridge sides have a thickness between 8 mm to 14 mm.

9. The caliper assembly according to Claim 7 wherein said aperture originates at said bridge sides and extends away from said bridge sides.

10. The caliper assembly according to Claim 7 wherein said bridge sides define centroids substantially aligned with a center of said at least one bore enabling tension deflection of said bridge sides.

11. The caliper assembly according to Claim 10 wherein said bridge sides have a thickness between 8 mm to 14 mm.

12. The caliper assembly according to Claim 7 wherein said first brake pad abuts said piston assembly so that said pad abutment is above a pad friction center.

13. The caliper assembly according to Claim 7 wherein an indentation is formed along said side beams and is continuous onto said second wall defining at least one rib.

14. The caliper assembly according to Claim 13 wherein an aperture is formed in said indentation.

15. The caliper assembly according to Claim 13 wherein said rib on each side beam forming at least one hoop configuration.

16. The caliper assembly according to Claim 15 preferably three hoop configurations are formed.

17. The caliper assembly according to Claim 7 wherein said second brake pad may have a larger area than said first brake pad.

18. The caliper assembly according to Claim 17 wherein said second brake pad may have a thickness less than said first brake pad.

19. The caliper assembly according to Claim 7 wherein stainless steel pad clips are positioned at said pad abutment for improving corrosion characteristics.

20. The caliper assembly according to Claim 7 wherein said aperture has a U or V-shape.

21. A method of manufacturing a caliper comprising:
forming a caliper body having a first wall with at least one bore, a second wall opposing said first wall with at least one aperture, a pair of bridge sides connecting said first and second walls defining an opening continuous with said at least one aperture;
dropping a tool into said opening and said aperture;
passing said tool into said caliper body; and
finishing an inner surface of said caliper body;
removing said tool from said caliper body.

22. The method according to Claim 23 further comprising finishing an inner surface of said bridge sides.

23. The method according to Claim 23 further comprising dropping a tool into said aperture and said opening and axially moving said tool for finishing said bore.

24. A method of manufacturing a caliper assembly comprising:
forming a caliper body having a first wall with at least one bore, a second wall opposing said first wall with at least one aperture, a pair of bridge sides connecting said first and second walls defining an opening continuous with said at least one aperture;
dropping a tool into said opening and aperture in said caliper body; and
finishing an inner surface of said caliper body;
removing said tool from said caliper body;
positioning a piston assembly in said at least one bore in said first wall;
securing a first and second brake pad in said caliper body, said first brake pad adjacent said first wall and said second brake pad adjacent said second wall.
